Europäisches Patentamt

European Patent Office

Office européen des brevets

(19)

(11) Veröffentlichungsnummer : **0 155 272 B1**

(12) **EUROPÄISCHE PATENTSCHRIFT**

(45) Veröffentlichungstag der Patentschrift :
04.05.88

(51) Int. Cl.⁴ : **G 01 P  1/02, G 01 P  3/488**

(21) Anmeldenummer : 84902792.5

(22) Anmeldetag : 24.07.84

(86) Internationale Anmeldenummer :
PCT/DE 84/00154

(87) Internationale Veröffentlichungsnummer :
WO/8501112 (14.03.85 Gazette 85/07)

(54) ELEKTRISCHES MESSGERÄT MIT ANSCHLUSSKABEL.

(30) Priorität : 02.09.83 DE 3331723

(43) Veröffentlichungstag der Anmeldung :
25.09.85 Patentblatt 85/39

(45) Bekanntmachung des Hinweises auf die Patenterteilung : 04.05.88 Patentblatt 88/18

(84) Benannte Vertragsstaaten :
DE FR GB SE

(56) Entgegenhaltungen :
DE-A- 2 243 331
DE-A- 2 606 845
FR-A- 2 128 827
FR-A- 2 263 519
US-A- 3 041 483

(73) Patentinhaber : ROBERT BOSCH GMBH
Robert-Bosch-Platz 1
D-7016 Gerlingen-Schillerhöhe (DE)

(72) Erfinder : BUCHSCHMID, Emil
Widukind Strasse 9
D-8501 Rosstal (DE)
Erfinder : FRENZNICK, Anton
Grossgescheidter Strasse40
8501 Eckental-Eschenau (DE)
Erfinder : NEIDHARD, Klaus
Kiefernschlag 13
D-8501 Wendelstein (DE)
Erfinder : ROBL, Gerhard
Haus-Nr. 54
D-8431 Pirkach (DE)

Jouve, 18, rue St-Denis, 75001 Paris, France

EP 0 155 272 B1

## Beschreibung

### Stand der Technik

Die Erfindung geht aus von einem elektrischen Meßgerät mit einem Anschlußkabel nach der Gattung des Hauptanspruchs, wie es aus der FR-A-21 28 827 (Fig. 1) in Form eines Stabsensors bekannt ist. Solche Ausführungen sind jedoch nicht feuchtigkeitsdicht. Feuchtigkeit gelangt durch Kapillarwirkung über die Anschlußleitung oder von der vorderen Stirnseite her in das Innere des Stabsensors und führt dort zur Oxidation bis hin zum Ausfall des Meßgerätes. Bei einem weiteren bekannten Stabsensor als Meßgerät ist die elektrische Spule auf einen Spulenkörper gewickelt, in welchem ein Flußleitstück mit einem Dauermagneten eingesetzt ist (DE-PS 24 10 630). An der vorderen Stirnseite des Stabsensors befindet sich ein Polschuh, der mit einem umlaufenden Zahnkranz an einem Rad zur Erfassung der Fahrgeschwindigkeit eines Kraftfahrzeuges zusammenwirkt. Der elektrische Anschluß der Spule erfolgt über zwei Stromschienen, an deren einem Ende ein Anschluß der Spule und an deren anderem Ende eine Leiterlitze eines Anschlußkabels angeschlossen ist. Das anschlußseitige Ende des Kabels sowie der übrigen Bauteile des Stabsensors sind von einem Kunststoff umspritzt. Nachteilig bei derartigen Lösungen ist, daß alle funktionswichtigen Prüfungen der Meßvorrichtung wie beispielsweise die Messung der Signalspannung, des Spulenwiderstandes und der Abmessungen des Sensors sowie Isolationsprüfungen erst dann erfolgen, wenn das Anschlußkabel bereits mit den Stromschienen verbunden ist. Dadurch ist die Handhabung des Sensors sowohl im Fertigungsablauf als auch im Prüfverfahren sehr ungünstig. Alle nach dem Anbringen des Anschlußkabels noch durchzuführenden Prüf- und Fertigungsarbeiten können daher auch nicht vollautomatisch abgewickelt werden. Mit der vorliegenden Lösung wird angestrebt, für eine feuchtigkeitsdichte Ausführung des Meßgerätes alle Fertigungsschritte sowie alle funktionswichtigen Prüfungen der Meßvorrichtung möglichst maschinell und ohne Behinderung durch die Anschlußleitung durchführen zu können.

### Vorteile der Erfindung

Das erfindungsgemäße Meßgerät mit den im Hauptanspruch aufgeführten Merkmalen hat den Vorteil, daß die Herstellung und Funktionsprüfung aller wesentlichen Teile der Meßvorrichtung ohne Anschlußleitungen und folglich automatisch erfolgen kann. Als weiterer Vorteil ist anzusehen, daß die wesentlichen Bauteile der Meßvorrichtung als vorgefertigte Baueinheit erst nach den Funktionsprüfungen in einem letzten Fertigungsschritt mit dem das Anschlußkabelende einfassenden Anschlußteil als weitere Baueinheit feuchtigkeitsdicht zusammengesetzt werden können.

Das Problem der unzureichenden Abdichtung des Anschlußteiles gegen Feuchtigkeit wurde zwar in an sich bekannter Weise bereits gelöst, indem die Leiterlitzen des Anschlußkabels mit einem Massivdraht verschweißt wurden und das Ganze dann mit Ausnahme der Massivdrahtenden — von einem Kunststoff feuchtigkeitsdicht umspritzt wurde. Zur vollständigen Lösung der Aufgabe ist es jedoch dann noch erforderlich, daß sich die Stromschienen an der Meßvorrichtung beim Zusammenfügen der Baueinheiten verfalten.

Durch die in den Ansprüchen 2 bis 4 aufgeführten Maßnahmen sind vorteilhafte Weiterbildungen und Verbesserungen der im Hauptanspruch angegebenen Merkmale möglich. Besonders vorteilhaft ist es, wenn die beiden vorgefertigten Baueinheiten des Meßgerätes nach der Kontaktierung der Leiterenden des Anschlußteiles mit den Stromschienen durch eine einen Rand des Anschlußteiles umschließende Bördelung des Gehäuses formschlüssig und feuchtigkeitsdicht zusammengefügt sind. In zweckmäßigerweise werden dabei die Stromschienen, die mit ihrem am Anschlußteil kontaktierten Ende im gestreckten Zustand aus dem Gehäuse vorstehen, durch das Zusammenfügen der beiden Baueinheiten gefaltet.

### Zeichnung

Ein Ausführungsbeispiel der Erfindung ist in der Zeichnung dargestellt und in der nachfolgenden Beschreibung näher erläutert. Es zeigen :

Figur 1 einen Stabsensor als erfindungsgemäßes Meßgerät im Querschnitt vor dem Zusammenfügen der zwei Baueinheiten und

Figur 2 den fertigen, aus den beiden durch eine Bördelung zusammengefügten Baueinheiten gebildeten Stabsensor.

### Beschreibung des Ausführungsbeispiels

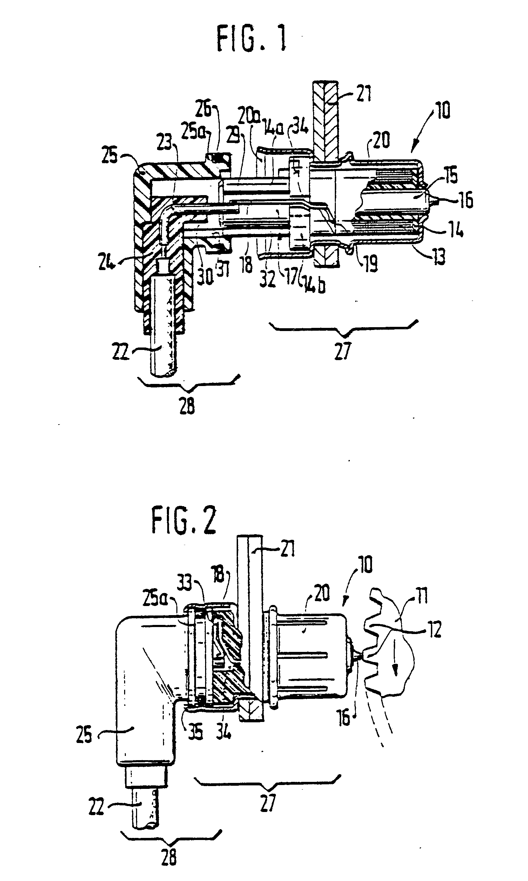

In den Figuren ist ein Stabsensor zur Messung der Drehzahl eines nicht dargestellten Rades an einem Kraftfahrzeug mit 10 bezeichnet. Der Stabsensor 10 wirkt dabei mit einem am Rad befestigten, in Pfeilrichtung umlaufenden Zahnkranz 11 zusammen, von dem in Figur 2 nur ein Ausbruch mit einigen Zähnen 12 dargestellt ist. Der in Figur 1 vor dem endgültigen Zusammenfügen im Querschnitt dargestellte Stabsensor 10 hat eine elektrische Spule 13, die auf einem Spulenkörper 14 aufgebracht ist. Innerhalb der Spule 13 ist in einer entsprechenden Öffnung des Spulenkörpers 14 ein Flußleitstück 15 eingesetzt, dessen vorderes Ende an der vorderen Stirnseite des Stabsensors 10 einen zahnförmigen Polschuh 16 trägt. Am hinteren Stirnende des aus weichmagnetischem Material hergestellten Flußleitstückes 15 befindet sich ein Dauermagnet 17 aus einem hartmagnetischen Material, wobei die einander zugewandten Stirnflächen des Dauermagneten 17 und des Flußleitstückes 15 großflächig aufeinanderliegen. Der Dauermagnet 17 ist dabei von einem oberen Teil 14a des Spulenkörpers 14 formschlüssig eingefaßt. Dieser Teil 14a des Spulenkörpers 14 trägt außerdem noch zwei Stromschienen 18, von denen nur die vordere erkennbar ist. Die Stromschienen 18 sind jeweils mit einem in einer Mulde 19 des Spulenkörpers 14 geführten Ende der Spule 13 kontaktiert. Der Spulenkörper 14 mit der Spule 13 und den Stromschienen 18 ist in ein Metallgehäuse 20 eingesetzt, welches vorne an einer Öffnung im Bereich des Polschuhes 16 mit diesem verschweißt ist. Das Metallgehäuse 20 ist in seinem mittleren Bereich mit einer Befestigungslasche 21 verlötet und hat an der dem Polschuh 16 abgewandten Seite einen offenen Rand 20a.

Außerdem ist das Ende eines flexiblen, zweiadrigen Anschlußkabels 22 mit seinen Leiterlitzen jeweils an einem rechtwinklig abgebogenen, ein Leiterende bildenden Massivdraht 23 angeschweißt und von einem Kunststoffkörper 24 feuchtigkeitsdicht umspritzt, der wiederum von einem Anschlußteil 25 aus Kunststoff eingefaßt ist. Das Anschlußteil 25 hat an seinem dem Metallgehäuse 20 zugewandten Ende einen verstärkten Rand 25a, der in einer Mulde einen Dichtring 26 trägt. Die Stromschienen 18 stehen mit ihrem freien Ende im gestreckten Zustand aus dem Metallgehäuse 20 heraus. In gleicher Weise ragen die freien Enden der beiden Massivdrähte 23 aus dem Anschlußteil 25 heraus.

Die Spule 13, der Spulenkörper 14, der Dauermagnet 17, das Flußleitstück 15, der Polschuh 16, die Stromschienen 18 und das Metallgehäuse 20 mit der Anschlußlasche 21 bilden eine Baueinheit 27, die maschinell vorgefertigt wird. Eine weitere Baueinheit 28 bildet das Anschlußteil 25 mit dem darin eingebetteten Ende der Anschlußleitung 22, den beiden Massivdrähten 23 und dem Kunststoffkörper 24. Nach Prüfung aller funktionswichtigen Daten an der Baueinheit 27, beispielsweise nach Prüfung der Signalspannung, des Spulenwiderstandes, der Isolation zum Metallgehäuse 20 und der Einbaumaße, insbesondere des Längenmaßes, werden die Stromschienen an ihrem freien Ende jeweils mit einem freien Ende der Massivdrähte 23 des Anschlußteiles 25 durch eine Schweißung 29 kontaktiert. Beide Baueinheiten 27 und 28 nehmen dabei die in Figur 1 dargestellte Position ein, wobei der vordere Teil 14a des Spulenkörpers 14 mit dem Dauermagneten 17 nur vorn in eine entsprechende Öffnung 30 des Anschlußteiles 25 eingreift. Durch eine Nut 31 in der Öffnung 30 und eine darin geführte entsprechende Leiste 32 des Spulenkörpers 14 werden die Baueinheiten 27 und 28 in einer zur Kontaktierung vorbestimmten Position gehalten. Außerdem ist durch die Länge der Massivdrähte 23 und der Stromschienen 18 sichergestellt, daß die Schweißstelle 29 zum Einführen von Schweißelektroden zugänglich ist.

Nach der Kontaktierung werden nun beide Baueinheiten 27 und 28 zusammengeführt, wobei der vordere Teil 14a des Spulenkörpers 14 in die Öffnung 30 des Anschlußteils 35 soweit eingeschoben wird, bis der Rand 25a des Anschlußteiles 25 auf einer Schulter 14b des Spulenkörpers 14 aufliegt. Beide Baueinheiten 27 und 28 werden dabei durch die Nut 31 und die darin geführte Leiste 32 zueinander in ihrer vorbestimmten Position gehalten. Durch das Zusammenfügen der beiden Baueinheiten 27 und 28 werden die Stromschienen 18 jeweils zusammengefaltet. Die so gebildete Faltung 33 der Stromschienen 18 gelangt dabei in eine Tasche 34, die in der Schulter 14b des Spulenkörpers 14 eingeformt ist.

Figur 2 zeigt zum Teil im Querschnitt den Stabsensor 10 mit den beiden zusammengefügten Baueinheiten 27 und 28. Nach der Kontaktierung der Drahtenden des Anschlußteiles 25 mit den Stromschienen 18 sind die ineinandergeschobenen beiden Baueinheiten 27 und 28 durch eine den Rand 25a des Anschlußteiles 25 umschließende Bördelung 35 des Gehäuserands 20a formschlüssig und feuchtigkeitsdicht zusammengefügt.

In gleicher Weise können auch Temperaturfühler, Drucksensoren sowie Drehzahlfühler mit Halbleiterelementen oder Dünnschichtelementen und dergleichen als Meßgeräte erfindungsgemäß in zwei vorgefertigte Baueinheiten gegliedert werden, wobei jeweils die eigentliche Meßvorrichtung eine Baueinheit bildet, die ohne störendes Anschlußkabel hergestellt und geprüft werden kann.

**Patentansprüche**

1. Elektrisches Meßgerät mit einem Anschlußkabel (22), dessen Ende bis auf die freien Leiterenden (23) in einem Anschlußteil (25) eingebettet ist, wobei die Leiterenden (23) nach vorn aus dem Anschlußteil (25) frei herausragen und mit Anschlüssen einer Meßvorrichtung (27), bestehend aus einer Spule (13), einem Spulenkörper (14), einem Dauermagneten (17), einem Flußleitstück (15), einem Polschuh (16) und einem diese Teile aufnehmenden Gehäuse (20) elektrisch verbunden sind, wobei das Anschlußteil (25) mit der Anschlußleitung (22) sowie die Meßvorrichtung (27) als vorgefertigte Baueinheiten (28, 27) zu einem induktiven Stabsensor (10) für umlaufende Körper durch eine einen Rand (25a) des Anschlußteiles (25) umschließende Bördelung (35) des Gehäuses (20) fest und formschlüssig zusammengefügt sind, dadurch gekennzeichnet,

a) daß die Leiterenden (23) des Anschlußteiles (25) aus Massivdraht bestehen, die mit den Leiterlitzen des Anschlußkabels (22) verschweißt, von einem Kunststoff (24) feuchtigkeitsdicht umspritzt und mit den als Stromschienen (18) ausgebildeten Anschlüssen der Meßvorrichtung (27) galvanisch verbunden sind,

b) daß die galvanische Verbindung (29) der Massivdrähte (23) mit den Stromschienen (18) im Bereich der das Gehäuse (20) und das Anschlußteil (25) verbindenden Bördelung (35) liegt und

c) daß die im noch nicht zusammengefügten Zustand der beiden vorgefertigten Baueinheiten (27, 28) gestreckt aus dem Gehäuse (20) vorstehenden Stromschienen (18) im feuchtigkeitsdicht zusammenngefügten Zustand der beiden vorgefertigten Baueinheiten (27, 28) quer zu ihrer Längsachse zusammengefaltet sind.

2. Meßgerät nach Anspruch 1, dadurch gekennzeichnet, daß die Stromschienen (18) je eine Falte (33) haben, die jeweils in einer am Spulenkörper (14) angeformten Tasche (34) liegt.

3. Meßgerät nach Anspruch 1, dadurch gekennzeichnet, daß mit einer Nut (31) in der einen Baueinheit (28) und einer darin geführten Leiste (32) an der anderen Baueinheit (27) beide Baueinheiten (27, 28) in einer zur Kontaktierung und Faltung der Stromschienen (18) vorbestimmten Position zueinander gehalten sind.

4. Meßgerät nach Anspruch 1, dadurch gekennzeichnet, daß der vom Gehäuse (20) umbördelte Rand (25a) des Anschlußteiles (25) einen Dichtring (26) trägt.

## Claims

1. Electric measuring instrument with a connecting cable (22), the end of which is embedded in a connector (25), apart from the free conductor ends (23), the conductor ends (23) protruding freely forwards out of the connector (25), and are electrically connected to terminals of a measuring device (27), comprising a coil (13), a coil former (14), a permanent magnet (17), a flux concentrating piece (15), a pole shoe (16) and a casing (20) accommodating these parts, the connector (25), with the connecting lead (22), and the measuring device (27) being joined firmly and positively as preassembled units (28, 27) to form an inductive rod sensor (10) for rotating bodies by a bead (35) of the casing (20) enclosing a rim (25a) of the connector (25), characterized in that

a) the conductor ends (23) of the connector (25) consist of solid wire, which are welded to the stranded conductor wires of the connecting cable (22), are spray-coated in moisture-proof manner by a plastic (24) and are galvanically connected to the terminals of the measuring device (27), which are designed as busbars (18),

b) the galvanic connection (29) of the solid wires (23) to the busbars (18) lies in the region of the bead (35) connecting the casing (20) and the connector (25), and

c) the busbars (18), projecting from the casing (20) when extended in the not yet joined state of the two preassembled units (27, 28), are folded together transversely to their longitudinal axis in the moisture-proof joined state of the two preassembled units (27, 28).

2. Measuring instrument according to Claim 1, characterized in that the busbars (18) each have a fold (33), which in each case lies in a pocket (34) integrally formed on the coil former (14).

3. Measuring instrument according to Claim 1, characterized in that the two units (27, 28) are held in a predetermined position with respect to each other for contacting and folding of the busbars (18) by a groove (31) in the one unit (28) and a strip (32), located therein, on the other unit (27).

4. Measuring instrument according to Claim 1, characterized in that the rim (25a) of the connector (25) beaded by the casing (20) bears a sealing ring (26).

## Revendications

1. Appareil de mesure électrique, avec un câble de connexion (22), dont l'extrémité est introduite jusqu'aux extrémités libres de conducteur (23), dans une partie de raccordement (25), les extrémités de conducteur (23) émergeant à cette occasion librement vers l'avant de la partie de raccordement (25) et étant reliées électriquement avec des raccordements d'un dispositif de mesure (27), composé d'une bobine (13), d'un corps de bobine (14), d'un aimant permanent (17), d'une pièce conductrice de flux (15), d'un patin polaire (16) et d'un carter (20), recevant ces pièces, la partie de raccordement (25) étant à cette occasion assemblée rigidement et de manière ajustée avec le câble de connexion (22), ainsi que le dispositif de mesure (27), en tant qu'éléments constitutifs préfabriqués (27, 28), avec un capteur-tige (10) inductif, pour des corps en rotation, au moyen d'un bordage (35) du carter (20), entourant un bord (25a) de la partie de raccordement (25), caractérisé

a) en ce que les extrémités de conducteur (23) de la partie de raccordement (25) sont composées en câble massif, qui sont soudées avec les torons conducteurs du câble de connexion (22), sont enrobées par injection, d'une matière plastique (24), de manière étanché à l'humidité et reliées galvaniquement avec les raccordements du dispositif de mesure (27), qui sont formés en barres conductrices (18),

b) en ce que la liaison galvanique (29) des câbles massifs (23) avec les barres conductrices (18) se trouve dans la zone du bordage (35), reliant le carter (20) et la partie de raccordement (25) et

c) en ce que les barres conductrices (18), émergeant du carter (20) dans un état étiré, non encore assemblé des deux éléments constitutifs (27, 28), sont repliées perpendiculairement à leur axe longitudinal, dans un état assemblé, étanche à l'humidité des deux éléments constitutifs (27, 28).

2. Appareil de mesure selon la revendication 1, caractérisé en ce que les barres conductrices (18) ont chacune un pliage (33), qui se trouve chacun dans une poche (34) formée sur le corps de bobine (14).

3. Appareil de mesure selon la revendication 1, caractérisé en ce que les deux éléments constitutifs (27, 28) sont maintenus dans une position prédéterminée, pour réaliser le contact et pour le pliage des barres conductrices (18), avec une rainure (31) située dans un élément constitutif et une languette (32) située sur l'autre élément constitutif (27), qui s'y trouve guidée.

4. Appareil de mesure selon la revendication 1, caractérisé en ce que le bord (25a) de la partie de raccordement (25), qui est bordé par le carter (20) porte une bague d'étanchéité (26).

# FIG. 1

# FIG. 2

1